(19)

Europäisches
Patentamt
European
Patent Office
Office européen
des brevets

(11) **EP 1 383 114 B1**

(12) **EUROPEAN PATENT SPECIFICATION**

(45) Date of publication and mention
of the grant of the patent:
**11.03.2009 Bulletin 2009/11**

(51) Int Cl.:
**G11B 5/455** *(2006.01)*      **G11B 5/596** *(2006.01)*
**G11B 20/12** *(2006.01)*

(21) Application number: **03016324.0**

(22) Date of filing: **18.07.2003**

(54) **Method and apparataus for measuring magnetic write width of magnetic head using burst pattern**

Verfahren und Vorrichtung zur Messung der magnetischen Schreibweite eines Magnetkopfes unter
Verwendung eines Burstmusters

Procédé et dispositif pour mésurer la largeur d'écriture magnetique d'un tête magnetique utilisant un
signal en rafale

(84) Designated Contracting States:
**DE GB**

(30) Priority: **18.07.2002 KR 2002041989**

(43) Date of publication of application:
**21.01.2004 Bulletin 2004/04**

(73) Proprietor: **SAMSUNG ELECTRONICS CO., LTD.**
**Suwon-City, Kyungki-do (KR)**

(72) Inventors:
• **Yeo, Chang-dong**
**Suji-eup,**
**Yongin-si,**
**Gyeonggi-do (KR)**

• **Kim, Jong-yoon,**
**902-1202 Byeokjeokgol**
**Paldal-gu,**
**Suwon-si,**
**Gyeonggi-do (KR)**
• **Park, Cheol-hoon**
**Suwon-si,**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**WO-A-01/59785**        **WO-A-02/27887**
**US-A- 6 061 201**        **US-B1- 6 265 868**
**US-B1- 6 404 576**

**Description**

The present invention relates to a field of measuring a magnetic write width (MWW) of a head of a hard disc drive (HDD), and more particularly, to a method and apparatus for measuring a magnetic write width of a head of a hard disc drive during an assembled state of the hard disc drive.

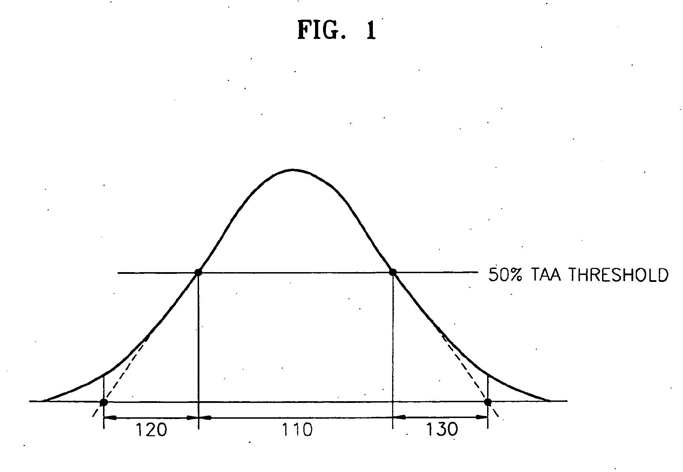

FIG. 1 shows a track profile for measuring a magnetic write width of a head of a conventional hard disc drive (HDD). In FIG. 1, a vertical axis represents an output signal of a head and a horizontal axis represents a position of a track.

Conventionally, the magnetic write width of the head was measured before the hard disc drive was assembled. That is, the magnetic write width of the head is not measured during an assembled state of the hard disc drive. The magnetic write width of the head before assembling the hard disc drive is measured using a Guzik Spinstand equipment. As shown in FIG. 1, after a track profile is drawn, the magnetic write width is measured on the basis of a predetermined high threshold value and a predetermined low threshold value of the track profile. That is, tangents, which touch the track profile at a value corresponding to 50% of the average amplitudes in the track profile, are drawn, thereby allowing the magnetic write width to be calculated. In FIG. 1, a reference numeral 110 represents a magnetic write width, and a sum of ranges defined by reference numerals 120 and 130 represents a magnetic read width.

Since the magnetic write width is measured before assembling the hard disc drive according to the prior art, the time for testing each of hard disc drive's components increases, thereby resulting in an increase of components' cost. Further, an adjacent track erase (ATE) feature and the measuring environment as well as the magnetic write width are factors, which all affects tracks adjacent to a target track while the HDD is operating. If the magnetic write width of the head is measured using only the profile of the target track in disregard of the adjacent tracks as in the prior art, an error between the measured magnetic write width and the magnetic write width of the real HDD may occur.

WO-A-01/59785 describes the measurement of a magnetical track width performance in order to decide on a sector specific write width. This is performed by writing test pattern onto the target an adjacent tracks and reading back the target track signal. The measured error rate of the read back signal of the target track indicates the track write width. Erasing of the adjacent tracks is an alternative to writing test pattern; measuring of target track amplitude ratio is an alternative for error rate measurement.

US-B-6.265.868 measures the magnetic track width by erasing successively the target track from both adjacent track sides and measuring the target track read amplitude.

WO-A-02/27887 measures the amplitude profile of a track width after the adjacent tracks are erased in a defined way. The measured profile is used for deciding on the head quality.

The present invention provides a method and apparatus for measuring a magnetic write width of a head by an offtrack profile with respect to an output signal of the head reading a burst pattern, which is written on a magnetic disc of a hard disc drive.

The present invention also provides a computer readable recording medium for recording a program for carrying out the method on a computer.

According to an aspect of the present invention, there is provided a method for measuring a magnetic write width of a magnetic head using a burst pattern. The method comprises seeking a target track on a magnetic disc to write a burst pattern on the target track; seeking tracks adjacent to the target track to write burst patterns on the adjacent tracks, which are offtracked by a predetermined percentage toward the target track; measuring an output signal of the magnetic head read by moving the magnetic head along the radius direction of the magnetic disc to create an offtrack profile; and measuring an amplitude reduction ratio of the target track from the offtrack profile to calculate a magnetic write width corresponding to the measured amplitude reduction ratio.

According to another aspect of the present invention, there is provided an apparatus for measuring a magnetic write width of a magnetic head using a burst pattern. The apparatus comprises a burst pattern write unit which writes a burst pattern on a track on a magnetic disc; a profile creating unit which measures an output signal of the magnetic head along the radius direction of the magnetic disc to create an offtrack profile; and a magnetic write width measuring unit which measures an amplitude reduction ratio of a target track from the offtrack profile to calculate the magnetic write width corresponding to the measured amplitude reduction ratio.

The above and other aspects and advantages of the present invention will become more apparent by describing in detail preferred embodiments thereof with reference to the attached drawings in which:

FIG. 1 shows a track profile for measuring a magnetic write width of a head of a conventional hard disc drive.
FIG. 2 is a block diagram, in which a magnetic write width measuring apparatus of a magnetic head of a hard disc drive is connected with the magnetic head of the hard disc drive according to the present invention;
FIG. 3 is a flow chart illustrating a method for measuring a magnetic write width of a magnetic head using a burst pattern according to the present invention;
FIG. 4 shows a magnetic write width of a target track reduced by the writing of tracks adjacent to the target track, decrements in the magnetic write width of the target track overwritten by the writing of the adjacent tracks, and areas of the magnetic write widths of the adjacent tracks which are overtracked by 20%, when the burst pattern is written on the magnetic disc in a case where the adjacent tracks are positioned at a 20% offtrack position, according to the present invention;

FIG. 5 shows a burst profile in which a burst pattern is written on a target track and offtrack patterns are written on tracks adjacent to the target so that an output signal of a magnetic head is measured along the radius direction of the magnetic head; and

FIG. 6 shows a relationship between a calculated amplitude reduction ratio of a target track and a magnetic write width according to the present invention.

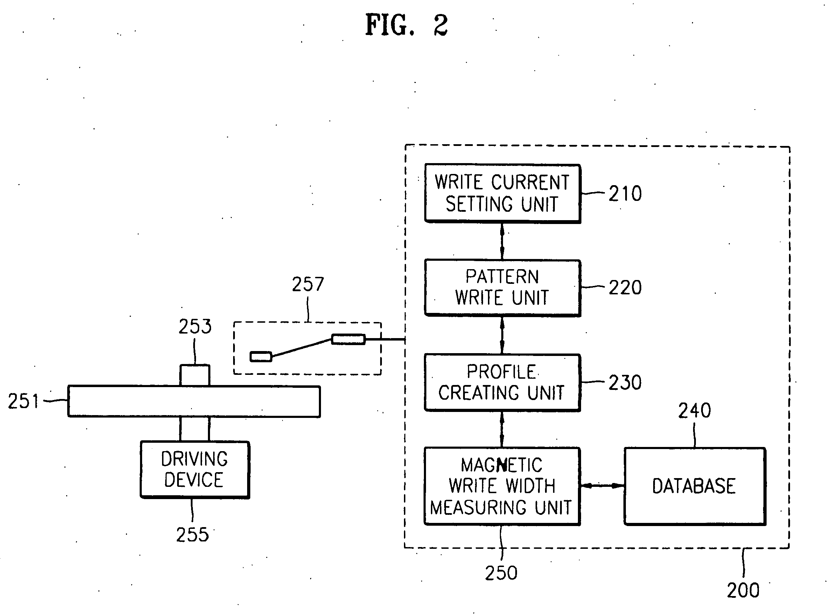

FIG. 2 is a block diagram in which a magnetic write width measuring apparatus 200 of a magnetic head 257 of a hard disc drive (HDD) according to the present invention is connected with the magnetic head 257 of the hard disc drive. The hard disc drive includes a magnetic disc 251, a spindle 253 and a driving device 255 which drive the magnetic disc 251, and the magnetic head 257. The magnetic write width measuring apparatus 200 includes a write current setting unit 210, a pattern write unit 220, a profile creating unit 230, a database 240, and a magnetic write width measuring unit 250.

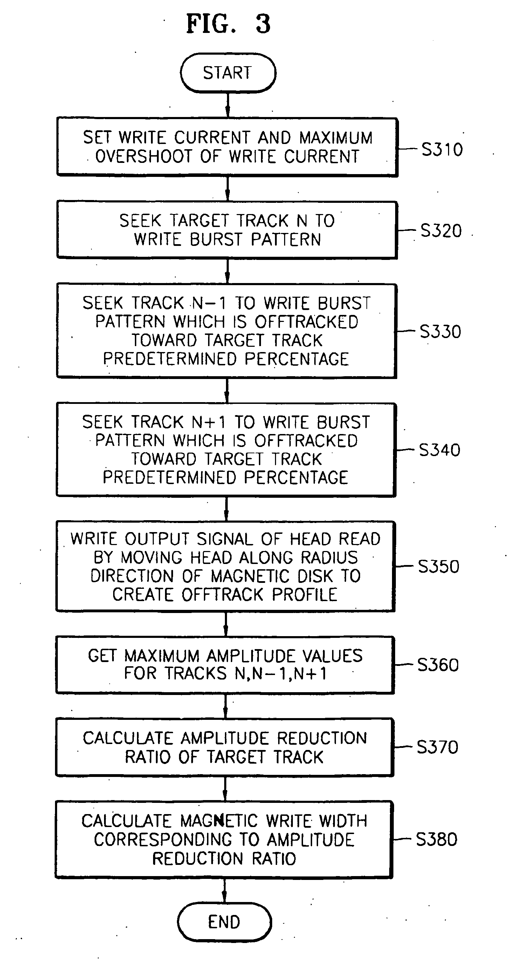

FIG. 3 is flow chart illustrating a method for measuring the magnetic write width of the magnetic head using a burst pattern according to the present invention.

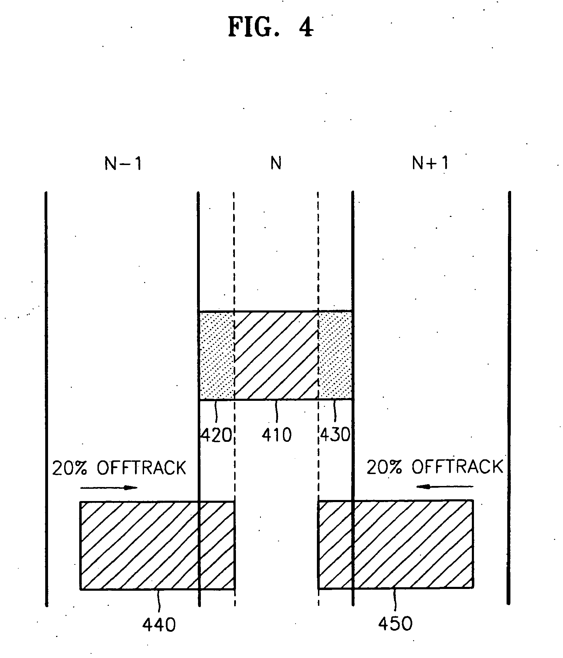

FIG. 4 shows a magnetic write width 410 of a target track N reduced by the writing of tracks N-1 and N+1 adjacent to the target track N, decrements 420 and 430 in the magnetic write width of the target track N overwritten by the writing of the adjacent tracks N-1 and N+1, and areas 440 and 450 of the magnetic write widths of the adjacent tracks N-1 and N+1 which are overtracked by 20%, when the burst pattern is written on the magnetic disc in a case where the adjacent tracks N-1 and N+1 are positioned at a 20% offtrack position, according to the present invention.

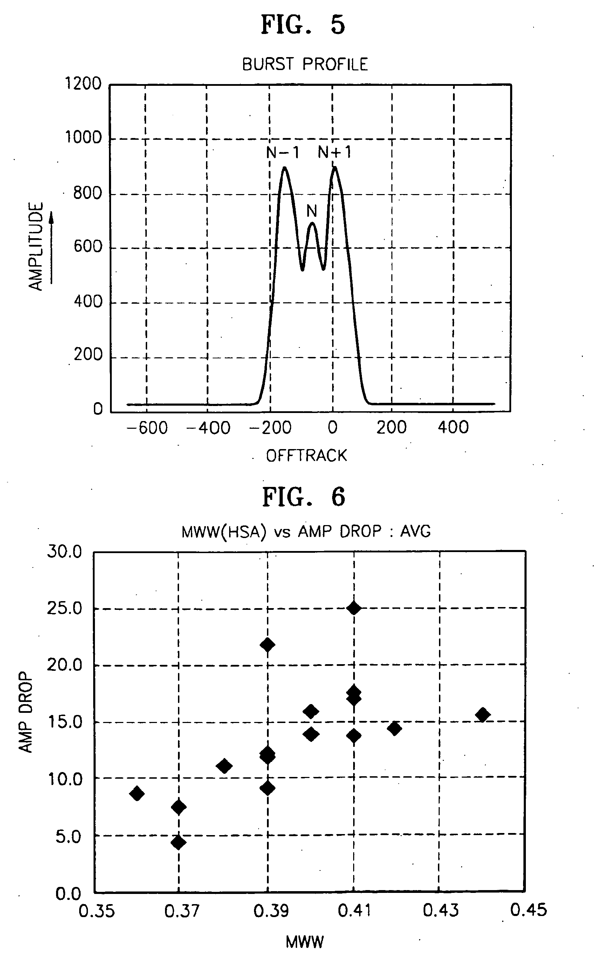

FIG. 5 shows a burst profile in which a burst pattern is written on the target track N and offtrack patterns are written on the adjacent tracks N-1 and N+1 so that the output signal of the magnetic head 257 is measured along the radius direction of the magnetic head.

The present invention will be described in detail with reference to FIGS. 2 to 5.

The write current setting unit 210 sets a write current and a maximum overshoot value of the write current, in step S310. An adjacent track erase (ATE) feature differs according to each of the magnetic heads, and the ATE feature is greatly affected by the write current and the maximum overshoot value of the write current. Since the ATE feature can affect the adjacent tracks irrespective of the magnetic write width, the write current and the maximum overshoot value of the write current are set to the same value in order to minimize the influence of the ATE feature.

The pattern write unit 220 seeks the target track N on the magnetic disc 251 via the magnetic head 257 to write a burst pattern on the target track N in step S320. The pattern write unit 220 seeks the track N-1 adjacent to the target track N to write a burst pattern on the adjacent track N-1, which is moved to a 20% offtrack position toward the target track N, in step S330. Further, the pattern write unit 220 seeks the track N+1 adjacent to the target track N to write a burst pattern on the adjacent track N+1, which is moved to a 20% offtrack position toward the target track N, in step S340. The pattern write unit 220 writes the burst pattern on the target track N once, and the burst patterns on the adjacent tracks N-1 and N+1 ten times, respectively.

The profile creating unit 230 writes an output signal of the magnetic head 257 read by moving the magnetic head 257 along the radius direction of the magnetic disc 251, thereby obtaining an offtrack profile as shown in FIG. 5, in step S350. As shown in the offtrack profile of FIG. 5, the maximum amplitude of the output signal of the target track N is less than that of the output signal of the adjacent tracks N-1 and N+1. Data for calculating the magnetic write widths based on amplitude reduction ratios of the target tracks is stored in the database 240.

The magnetic write width measuring unit 250 gets the maximum amplitudes of the target track N and the adjacent tracks N-1 and N+1, in step S360. The amplitude reduction ratio of the target track N is calculated from the following Equation (1), in step S370.

$$\text{Amplitude Reduction Ratio} = \frac{(Amp_{N-1} + Amp_{N+1})/2 - Amp_N}{(Amp_{N-1} + Amp_{N+1})/2} \quad \ldots\ldots\ldots\ldots \quad (1)$$

In Equation (1), $Amp_N$ indicates the maximum amplitude value for the target track N, and $Amp_{N-1}$ and $Amp_{N+1}$ indicate the maximum amplitude values of the adjacent tracks N-1 and N+1.

After calculating the amplitude reduction ratio of the target track N from above Equation (1), the magnetic write width of the head during the assembled state of the HDD is calculated from the data stored in the database 240, in step S380.

FIG. 6 shows a relationship between the calculated amplitude reduction ratio of the target track N and the magnetic write width. In FIG. 6, a vertical axis represents the amplitude reduction ratio of the target track N (unit: %), and a horizontal axis represents the magnetic write width of the head (unit: $\mu$m). The relationship between the amplitude reduction ratio of the target track N and the magnetic write width of the head can be considered as a linear equation, and the values obtained from this relationship are stored in the database 230. Thus, after calculating the amplitude reduction ratio, the magnetic write width can be obtained from the relationship values stored in the database 230.

The present invention also can be embodied as a computer readable code on a recording medium capable of being read by a computer. A computer readable recording medium includes all kinds of recording devices, in which data capable of being reproduced by a computer system is stored. The computer readable recording medium may include a ROM, a RAM, a CD-ROM, a magnetic tape, a hard disc, a floppy disc, a flash memory, an optical data storage, a recording device embodied as a carrier wave form, for example, transmission over the Internet. Further, the computer readable recording medium may be distributed to computer systems connected to a network so that the computer readable recording medium may be stored and carried out as a computer readable code in a distributed computing environment.

As described above, according to the present invention, since a magnetic write width of a HDD, which is an important design parameter affecting the performance of the HDD, is measured in an assembled state of the HDD, the cost for manufacturing the HDD can be reduced and the magnetic write width of the head can appropriately and easily be set in the HDD.

While the present invention has been particularly shown and described with reference to preferred embodiments thereof, it will be understood by those of ordinary skill in the art that various changes in form and details may be made therein without departing from the scope of the present invention as defined by the appended claims.

**Claims**

**1.** A method for measuring a magnetic write width of a magnetic head using burst patterns, comprising:

(a) seeking (S320) a target track on a magnetic disc to write a burst pattern on the target track;
(b) seeking (S330, S340) tracks adjacent to the target track to write burst patterns on the adjacent tracks, which are offtracked by a predetermined percentage toward the target track;
(c) measuring (S350) an output signal of the magnetic head read by moving the magnetic head along the radius direction of the magnetic disc to create a profile, the profile being measured as amplitude values over the target track and the both adjacent tracks; and
(d) calculating an amplitude reduction ratio between the maximum amplitude value ($Amp_N$) for the target track to the maximum amplitude values ($Amp_{N-1}$ and $Amp_{N+1}$) for the adjacent tracks to determine a magnetic write width of the magnetic head.

**2.** The method of claim 1. wherein (d) comprises:

(d1) obtaining (S360) maximum amplitudes with respect to the output signals of each of the target track and the adjacent tracks from the offtrack profile;
(d2) calculating (S370) the amplitude reduction ratio of the target track; and
(d3) calculating (S380) the magnetic write width corresponding to the calculated amplitude reduction ratio.

**3.** The method of claim 2, wherein in (d2), the amplitude reduction ratio is calculated from the following equation:

$$\text{Amplitude Reduction Ratio} = \frac{(Amp_{N-1} + Amp_{N+1})/2 - Amp_N}{(Amp_{N-1} + Amp_{N+1})/2}$$

**4.** An apparatus for measuring a magnetic write width of a magnetic head using burst patterns, comprising:

a burst pattern write unit (220) which writes burst patterns on a target track and on the adjacent tracks on a magnetic disc;
a profile creating unit (230) which measures an output signal, of the magnetic head along the radius direction of the magnetic disc to create an offtrack profile, which is the profile being measured as amplitude values from the target track and both adjacent tracks, and

a magnetic write width measuring unit (250) which measures an amplitude reduction ratio of a target track from the offtrack profile to calculate the magnetic write width, where the amplitude reduction ratio is calculated between the maximum amplitude value for the target track to the maximum amplitude values for both adjacent tracks, corresponding to the measured amplitude reduction ratio.

**5.** The apparatus of claim 4, further comprising a database (240) in which data for calculating the magnetic write width based on the amplitude reduction ratio is stored.

**6.** A computer readable recording medium in which a program for carrying out a method according to any one of claims 1 to 3 on a computer is recorded.


**Patentansprüche**

**1.** Verfahren zum Messen einer magnetischen Schreibbreite eines magnetischen Kopfes unter Verwendung von Burstmustem, umfassend:

(a) Suchen (S320) einer Zielspur auf einer magnetischen Platte zum Schreiben eines Burstmusters auf die Zielspur;

(b) Suchen (S330, S340) von zu der Zielspur benachbarten Spuren zum Schreiben von Burstmustem auf die benachbarten Spuren, die um einen vorbestimmten Prozentsatz gegenüber der Zielspur spurversetzt sind;

(c) Messen (S350) eines Ausgabesignals des magnetischen Kopfes mittels Lesen durch Bewegen des magnetischen Kopfes entlang der Radiusrichtung der magnetischen Platte zum Erzeugen eines Profils, wobei das Profil als Amplitudenwerte über der Zielspur und den beiden benachbarten Spuren gemessen wird; und

(d) Berechnen eines Amplitudenverringerungsverhältnisses zwischen dem Maximalamplitudenwert ($Amp_N$) für die Zielspur und den Maximalamplitudenwerten ($Amp_{N-1}$ und $Amp_{N+1}$) für die benachbarten Spuren zum Bestimmen einer magnetischen Schreibbreite des magnetischen Kopfes.

**2.** Verfahren nach Anspruch 1, wobei (d) umfasst:

(d1) Ermitteln (S360) von Maximalamplituden in Bezug auf die Ausgabesignale von jedem von der Zielspur und den benachbarten Spuren aus dem Spurversatzprofil;

(d2) Berechnen (S370) des Amplitudenverringerungsverhältnisses der Zielspur; und

(d3) Berechnen (S380) der magnetischen Schreibbreite entsprechend dem berechneten Amplitudenverringerungsverhältnis.

**3.** Verfahren nach Anspruch 2, wobei in (d2) das Amplitudenverringerungsverhältnis aus der nachfolgenden Gleichung berechnet wird:

$$\text{Amplitudenverringerungsverhältnis} = \frac{(Amp_{N-1} + Amp_{N+1})/2 - Amp_N}{(Amp_{N-1} + Amp_{N+1})/2}$$

**4.** Vorrichtung zum Messen einer magnetischen Schreibbreite eines magnetischen Kopfes unter Verwendung von Burstmustem, umfassend:

eine Burstmusterschreibeinheit (220) zum Schreiben von Burstmustem auf eine Zielspur und auf die benachbartem Spuren auf einer magnetischen Platte;

eine Profilerzeugungseinheit (230) zum Messen eines Ausgabesignals des magnetischen Kopfes entlang der Radiusrichtung der magnetischen Platte zum Erzeugen eines Spurversatzprofils, das ein Profil ist, das als Amplitudenwerte aus der Zielspur und den beiden benachbarten Spuren gemessen wird; und

eine Magnetschreibbreitenmesseinheit (250) zum Messen eines Amplitudenverringerungsverhältnisses einer Zielspur aus dem Spurversatzprofil zum Berechnen der magnetischen Schreibbreite entsprechend dem gemessenen Amplitudenverringerungsverhältnis, wobei das Amplitudenverringerungsverhältnis zwischen dem Maximalamplitudenwert für die Zielspur und den Maximalamplitudenwerten für beide benachbarten Spuren berechnet wird.

**5.** Vorrichtung nach Anspruch 4, des Weiteren umfassend eine Datenbank (240), in der Daten zum Berechnen der magnetischen Schreibbreite auf Grundlage des Amplitudenverringerungsverhältnisses gespeichert werden.

**6.** Computerlesbares Aufzeichnungsmedium, auf dem ein Programm zum Ausführen eines Verfahrens nach einem der Ansprüche 1 bis 3 auf einem Computer aufgezeichnet ist.

**Revendications**

**1.** Procédé pour mesurer une largeur d'écriture magnétique d'une tête magnétique en utilisant des motifs en rafale, comportant les étapes consistant à :

(a) rechercher (S320) une piste cible sur un disque magnétique pour écrire un motif en rafale sur la piste cible,
(b) rechercher (S330, S340) des pistes adjacentes à la piste cible pour écrire des motifs en rafale sur les pistes adjacentes, lesquelles sont hors piste d'un pourcentage prédétermine en direction de la piste cible,
(c) mesurer (S350) un signal de sortie de la tête magnétique lue en déplaçant la tête magnétique le long de la direction de rayon du disque magnétique afin de créer un profil, le profil étant mesuré sous la forme de valeurs d'amplitude sur la piste cible et les deux pistes adjacentes, et
(d) calculer un taux de réduction d'amplitude entre la valeur d'amplitude maximale ($Amp_N$) pour la piste cible et les valeurs d'amplitude maximale ($Amp_{N-1}$ et $Amp_{N+1}$) pour les pistes adjacentes afin de détermine une largeur d'écriture magnétique de la tête magnétique.

**2.** Procédé selon la revendication 1, dans lequel (d) comporte les étapes consistant à :

(d1) obtenir (S360) des amplitudes maximales par rapport aux signaux de sortie de chacune de la piste cible et des pistes adjacentes depuis le profile hors piste,
(d2) calculer (S370) le taux de réduction d'amplitude de la piste cible, et
(d3) calculer (S380) la largeur d'écriture magnétique correspondant au taux de réduction d'amplitude calculé.

**3.** Procédé selon la revendication 2, dans lequel à l'étape (d2), le taux de réduction d'amplitude est calculé à partir de l'équation suivante :

$$\textbf{Taux de réduction d'amplitude} = \frac{(Amp_{N-1} + Amp_{N+1})/2 - Amp_N}{(Amp_{N-1} + Amp_{N+1})/2}$$

**4.** Dispositif pour mesurer une largeur d'écriture magnétique d'une tête magnétique en utilisant des motifs en rafale, comportant :

une unité d'écriture de motifs en rafale (220) laquelle écrit des motifs en rafale sur une piste cible et sur les pistes adjacentes sur un disque magnétique,
une unité de création de profil (230) qui mesure un signal de sortie de la tête magnétique le long de la direction de rayon du disque magnétique afin de créer un profil hors piste, lequel est le profil étant mesuré sous la forme de valeurs d'amplitude depuis la piste cible et les deux pistes adjacentes, et
une unité de mesure de largeur d'écriture magnétique (250) qui mesure un taux de réduction d'amplitude d'une piste cible à partir du profil hors piste afin de calculer la largeur d'écriture magnétique, où le taux de réduction d'amplitude est calculé entre la valeur d'amplitude maximale pour la piste cible et les valeurs d'amplitude maximale pour les deux pistes adjacentes correspondant au taux de réduction d'amplitude mesuré.

**5.** Dispositif selon la revendication 4, comportant en outre une base de données (240) dans laquelle des données pour calculer la largeur d'écriture magnétique sur la base du taux de réduction d'amplitude sont mémorisées.

**6.** Support d'enregistrement lisible par ordinateur dans lequel un programme pour mettre en oeuvre un procédé conformément à l'une quelconque des revendications 1 à 3 sur un ordinateur est enregistré.

# FIG. 1

50% TAA THRESHOLD

120    110    130

# FIG. 2

# FIG. 3

START

SET WRITE CURRENT AND MAXIMUM OVERSHOOT OF WRITE CURRENT — S310

SEEK TARGET TRACK N TO WRITE BURST PATTERN — S320

SEEK TRACK N-1 TO WRITE BURST PATTERN WHICH IS OFFTRACKED TOWARD TARGET TRACK PREDETERMINED PERCENTAGE — S330

SEEK TRACK N+1 TO WRITE BURST PATTERN WHICH IS OFFTRACKED TOWARD TARGET TRACK PREDETERMINED PERCENTAGE — S340

WRITE OUTPUT SIGNAL OF HEAD READ BY MOVING HEAD ALONG RADIUS DIRECTION OF MAGNETIC DISK TO CREATE OFFTRACK PROFILE — S350

GET MAXIMUM AMPLITUDE VALUES FOR TRACKS N,N-1,N+1 — S360

CALCULATE AMPLITUDE REDUCTION RATIO OF TARGET TRACK — S370

CALCULATE MAGNETIC WRITE WIDTH CORRESPONDING TO AMPLITUDE REDUCTION RATIO — S380

END

# FIG. 4

# FIG. 5

BURST PROFILE

# FIG. 6

MWW(HSA) vs AMP DROP : AVG

**EP 1 383 114 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0159785 A
- US 6265868 B
- WO 0227887 A